# EUROPÄISCHE PATENTSCHRIFT

(11) **EP 1 529 232 B1**
(45) Veröffentlichungstag und Bekanntmachung des Hinweises auf die Patenterteilung: **19.03.2008**
(21) Anmeldenummer: 03792288.7
(22) Anmeldetag: 09.08.2003
(51) Int. Cl.: G02B 6/44

(54) **LICHTWELLENLEITER-VERTEILERSCHRANK**
OPTICAL WAVEGUIDE DISTRIBUTION CABINET
BLOC DE DISTRIBUTION A FIBRES OPTIQUES

(30) Priorität: 15.08.2002 DE 10238189
(43) Veröffentlichungstag der Anmeldung: 11.05.2005
(73) Patentinhaber: CCS Technology, Inc., Wilmington, DE 19803 (US)
(72) Erfinder: FRÖHLICH, Franz-Friedrich, 58091 Hagen (DE); MÜLLER, Michael, 58706 Menden (DE)
(74) Vertreter: Sturm, Christoph
(86) Internationale Anmeldenummer: PCT/EP2003/008863
(87) Internationale Veröffentlichungsnummer: WO 2004/019101

(56) Entgegenhaltungen:
- EP-A- 0 585 809
- WO-A-00/52504
- WO-A-02/103429
- CH-A- 623 698
- US-A- 5 734 776

## Beschreibung

Die Erfindung betrifft einen Lichtwellenleiter-Verteilerschrank gemäß dem Oberbegriff des Anspruchs 1.

Beim Aufbau von Lichtwellenleiterkabel-Netzwerken werden Verteilerschränke für die Gewährleistung einer strukturierten Verkabelung benötigt. Eine Anforderung, die an Lichtwellenleiter-Verteilerschränke gestellt wird, ist eine maximale Bestückung derselben bei hoher Packungsdichte und gleichzeitiger geringfügiger mechanischer Beanspruchung der Lichtwellenleiter. So ist es aus dem Stand der Technik bereits bekannt, in einem Lichtwellenleiter-Verteilerschrank einen schwenkbaren Rahmen anzuordnen, an welchem Baugruppen zum Verbinden von mittels Patchkabeln geführten Lichtwellenleitern befestigt sind. Dies erlaubt eine strukturierte Verkabelung und eine hohe Packungsdichte innerhalb eines einzigen Lichtwellenleiter-Verteilerschranks.

Sollen jedoch die Patchkabel aus dem Lichtwellenleiter-Verteilerschrank zur Verkabelung mit einem anderen, insbesondere benachbarten, Lichtwellenleiter-Verteilerschrank herausgeführt werden, so ist dies bei aus dem Stand der Technik bekannten Verteilerschränken nur unzureichend möglich, da entweder die Patchkabel nur vereinzelt - d.h. in geringen Mengen - aus dem Lichtwellenleiter-Verteilerschrank herausgeführt werden können oder andererseits die strukturierte und schnelle Verkabelung der Patchkabel beeinträchtigt wird.

Ein Lichtwellenleiter-Verteilerschrank mit den Merkmalen des Oberbegriffs des Anspruchs 1 ist aus der EP 0 585 809 A1 bekannt. So zeigt dieser Stand der Technik einen Verteilerschrank für Lichtwellenleiter mit einem Gehäuse und einem im Gehäuse schwenkbar gelagerten Rahmen, wobei der Rahmen Baugruppen zum Verbinden von Lichtwellenleitern trägt. Der Rahmen ist gegenüber dem Gehäuse verkürzt, und zwar derart, dass zwischen einem unteren Ende des Gehäuses und einem unteren Ende des Rahmens eine Aufnahme für Lichtwellenleiterkabel ausgebildet ist. Hinsichtlich weiteren Standes der Technik wird verwiesen auf CH 623,698 A5, WO 00/52505 sowie WO 02/103429.

Hiervon ausgehend liegt der vorliegenden Erfindung das Problem zu Grunde, einen neuartigen Lichtwellenleiter-Verteilerschrank zu schaffen.

Dieses Problem wird durch einen Lichtwellenleiter-Verteilerschrank mit den Merkmalen des Anspruchs 1 gelöst. Bei dem erfindungsgemäßen Lichtwellenleiter-Verteilerschrank können Patchkabel in großen Mengen aus dem Lichtwellenleiter-Verteilerschrank herausgeführt werden ohne dass die strukturierte und schnelle Verkabelung der Patchkabel beeinträchtigt wird.

Bevorzugte Weiterbildungen der Erfindung ergeben sich aus den Unteransprüchen und der nachfolgenden Beschreibung. Ein Ausführungsbeispiel wird anhand der Zeichnung näher erläutert. In der Zeichnung zeigt:
- Fig. 1:: einen Ausschnitt aus einem erfindungsgemäßen Lichtwellenleiter-Verteilerschrank in perspektivischer Seitenansicht,
- Fig. 2:: den Ausschnitt gemäß Fig. 1 mit einem verschwenkten Rahmen des erfindungsgemäßen Lichtwellenleiter-Verteilerschranks in einer gegenüber Fig. 1 gedrehten perspektivischen Seitenansicht,
- Fig. 3:: einen Detail des erfindungsgemäßen Lichtwellenleiter-Verteilerschranks in perspektivischer Ansicht von unten, und
- Fig. 4:: einen weiteres Detail des erfindungsgemäßen Lichtwellenleiter-Verteilerschranks in perspektivischer Seitenansicht.

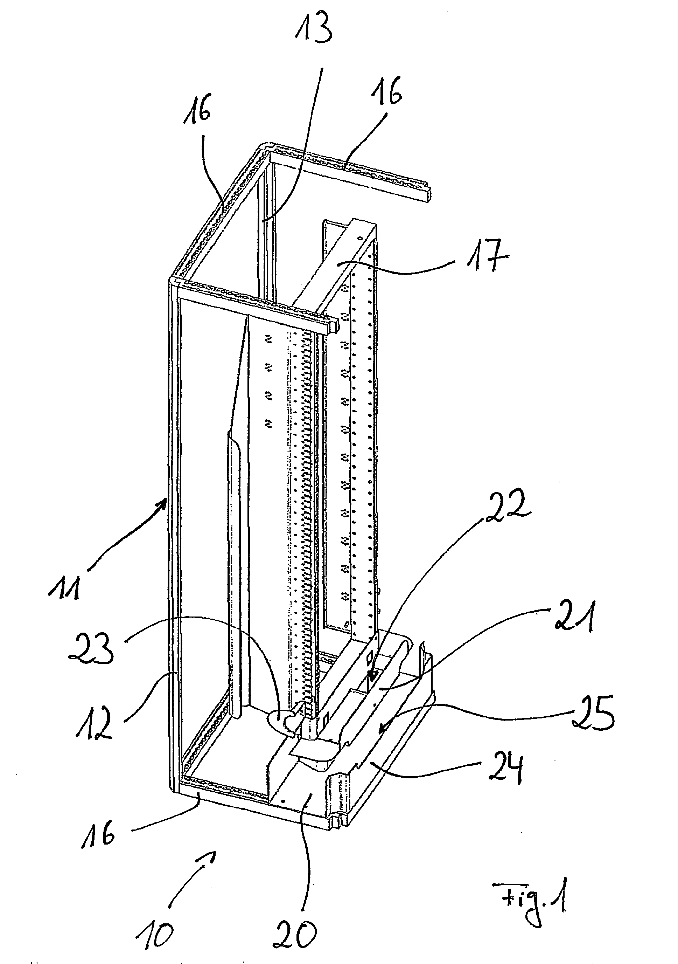

Figuren 1 bis 4 zeigen Ausschnitte aus einem erfindungsgemäßen Lichtwellenleiter-Verteilerschrank in unterschiedlichen perspektivischen Ansichten. Ein derartiger Lichtwellenleiter-Verteilerschrank wird zum Aufbau einer strukturierten Verkabelung von Lichtwellenleiterkabel-Netzwerken benötigt.

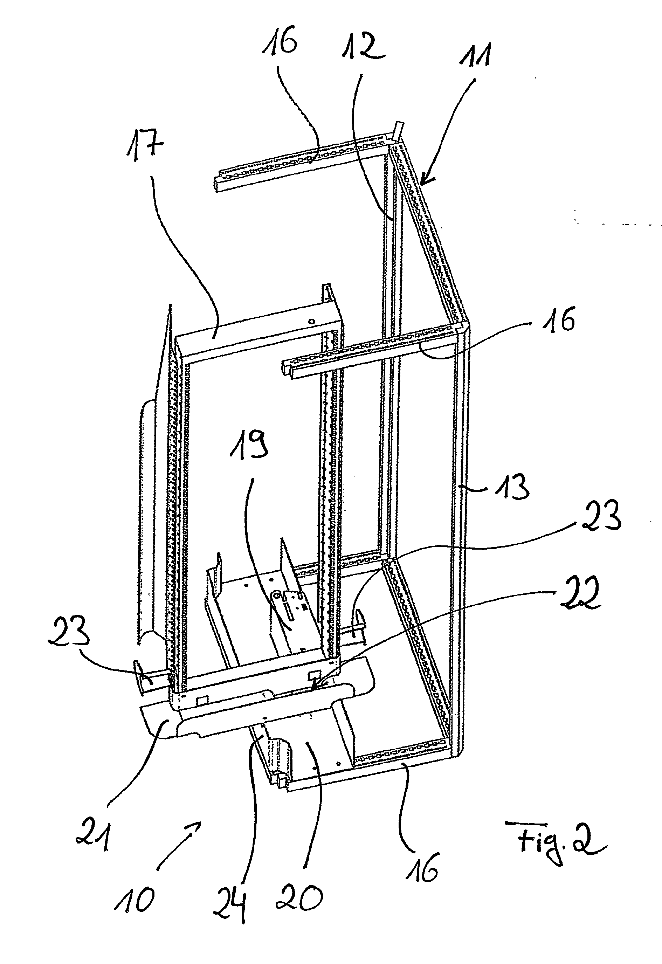

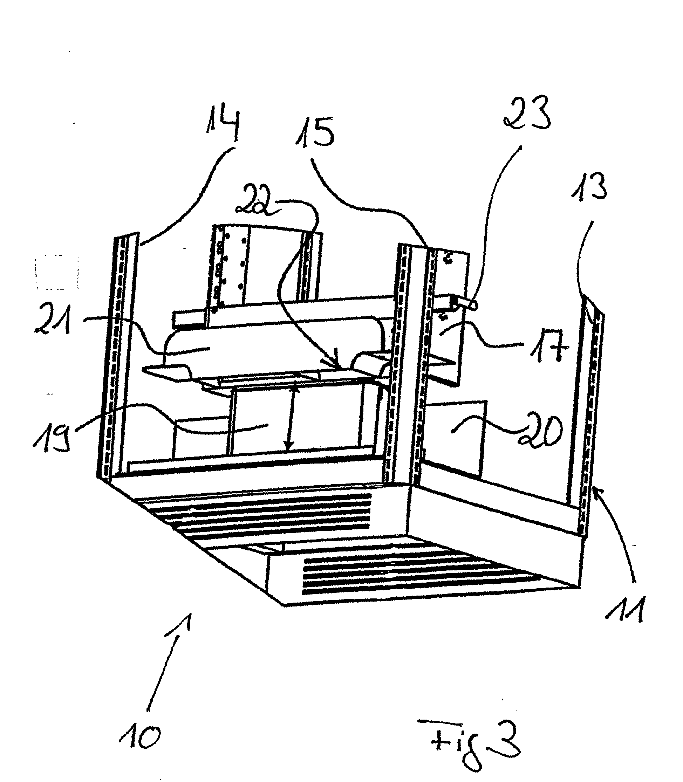

Ein Lichtwellenleiter-Verteilerschrank 10 umfasst ein Gehäuse 11, welches durch sich im Bereich seiner Längskanten erstreckende Holme gebildet wird. So zeigen Figuren 1 und 2 zwei sich in vertikaler Richtung des Gehäuses 11 erstreckende Holme 12, 13, die auf einer Rückseite des Gehäuses 11 angeordnet sind. Ebenso verfügt das Gehäuse 11 an der Vorderseite über vertikal verlaufende Holme 14, 15, diese sind jedoch der besseren Darstellbarkeit wegen in Figuren 1 und 2 nicht dargestellt, jedoch in Figur 3. Zwischen den vertikal verlaufenden Holmen 12, 13, 14 und 15 erstrecken sich horizontal verlaufende Holme 16. Die horizontal verlaufenden Holme 16 verbinden jeweils zwei vertikal verlaufende Holme 12 und 13 bzw. 14 und 15 bzw. 13 und 15 miteinander. Durch die Holme 12, 13, 14, 15 und 16 wird demnach das Gehäuse 11 des erfindungsgemäßen Lichtwellenleiter-Verteilerschranks 10 gebildet.

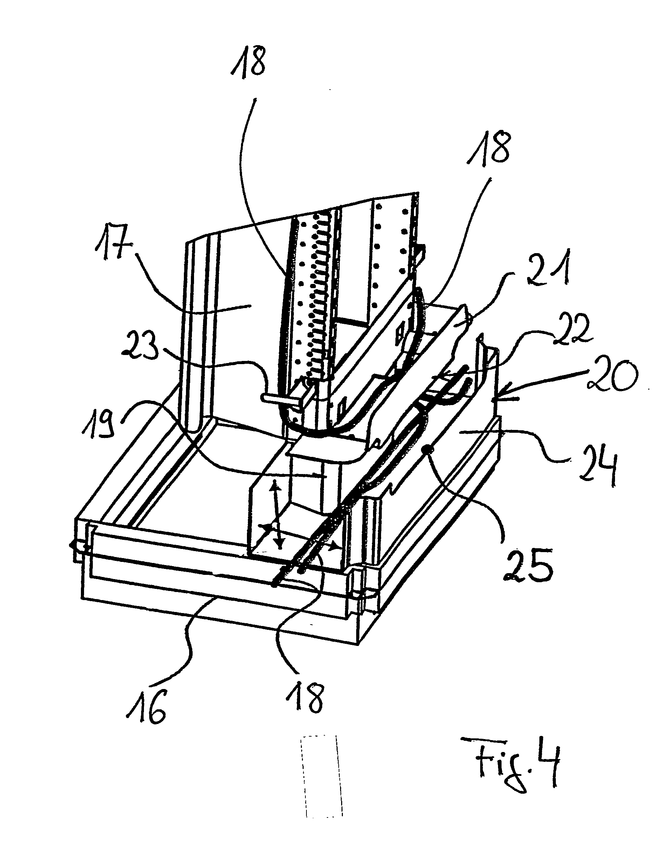

Innerhalb des Gehäuses 11 ist ein Rahmen 17 positioniert. Der Rahmen 17 ist gegenüber dem Gehäuse 11 schwenkbar. Dies ist insbesondere in Figuren 1 und 2 dargestellt. So zeigt Figur 1 einen in das Gehäuse 11 des Lichtwellenleiter-Verteilerschranks 10 hineingeschwenkten und Figur 2 einen aus dem Gehäuse 11 herausgeschwenkten Rahmen 17. Der Rahmen 17 dient der Aufnahme nicht-dargestellter Baugruppen zum Verbinden von mittels Patchkabeln 18 (siehe Figur 4) geführten Lichtwellenleitern. Bei diesen nicht-dargestellten Baugruppen zum Verbinden der mittels Patchkabel 18 geführten Lichtwellenleiter handelt es sich typischerweise um in sogenannten Baugruppenträgern zusammengefasste Steckermodule oder Spleissmodule. Die Anordnung und Ausgestaltung der in dem schwenkbaren Rahmen 17 befestigten Baugruppen zum Verbinden der Lichtwellenleiter ist dem hier angesprochenen Fachmann geläufig und bedarf keiner näheren Ausführung.

Erfindungsgemäß ist der schwenkbare Rahmen 17 gegenüber dem Gehäuse 11 verkürzt ausgebildet. Die Höhe des schwenkbaren Rahmens 17 ist demnach geringer als die Höhe des Gehäuses 11. Mit anderen Worten ist die Höhe des Rahmens 17 gegenüber der Höhe des Gehäuses 11 verkürzt ausgebildet. Wie insbesondere Figuren 2 und 3 entnommen werden kann, ist der verkürzt ausgebildete Rahmen 17 erfindungsgemäß auf einem Sockel 19 schwenkbar gelagert. Der Sockel 19 ist im Bereich eines Bodens des Gehäuses 11 in einer Aufnahme 20 in etwa mittig positioniert. Der Sockel 19 und die Aufnahme 20 sind demnach fest mit den Holmen 16 des Gehäuses 11 des Lichtwellenleiter-Verteilerschranks 10 verbunden, die den Boden des Lichtwellenleiter-Verteilerschranks 10 bilden. Der Rahmen 17 ist demnach gegenüber dem Gehäuse 11 und damit gegenüber der Aufnahme 20 und dem Sockel 19 verschwenkbar. Die Aufnahme 20 und der Sockel 19 bilden eine mechanische Einheit, die alle auftretenden Kräfte, wie die Last des Rahmens 17, Kipp- und Drehmomente beim Schwenken des Rahmens 17 aufnehmen. Der Sockel 19 ist so ausgestaltet, dass eine Verschwenkung des Rahmens 17 zu beiden Seiten, also ein Linksschwenk oder ein Rechtsschwenk des Rahmens 17, ermöglicht wird.

Wie bereits ausgeführt wurde, ist der Sockel 19 mittig in der Aufnahme 20 angeordnet. Der Sockel verfügt dabei gegenüber der Aufnahme 20 über eine verkürzte Breite und Tiefe, sodass zu beiden Seiten des Sockels 19 sowie vor dem Sockel 19 in der Aufnahme 20 Freiräume für die Patchkabel 18 geschaffen werden. Längskanten des Sockels 19 sind abgerundet, damit die Patchkabel 18 in der Aufnahme 20 nicht beschädigt werden, insbesondere bei Bewegungen der Patchkabel 18 entlang der Längskanten des Sockels 19 beim Verschwenken des Rahmens 17.

Durch die Verkürzung des Rahmens 17 um die Höhe des Sockels 19 und die obige Ausgestaltung des Sockels 19 wird demnach im Bodenbereich des Lichtwellenleiter-Verteilerschranks 10 ein Raum zur Aufnahme der Patchkabel 18 geschaffen, der sich von einer Seite Lichtwellenleiter-Verteilerschranks 10 zur gegenüberliegenden Seite desselben erstreckt und der durch die Schwenkbewegung des Rahmens 17 nicht beeinflusst wird.

Einem unteren Ende des Rahmens 17 ist eine Führung 21 für die Patchkabel 18 zugeordnet. Die Führung 21 ist zusammen mit dem Rahmen 17 gegenüber dem Gehäuse 11 und damit gegenüber der Aufnahme 20 und dem Sockel 19 verschwenkbar. Die Führung 21 dient der Führung der im Lichtwellenleiter-Verteilerschrank 10 verwalteten Patchkabel 18 und der Durchleitung der Patchkabel 18 in die Aufnahme 20. Hierzu verfügt die Führung 21 über eine Öffnung 22. Durch die Öffnung 22 können die Patchkabel 18 von der Führung 21 in die Aufnahme 20 geleitet werden. Die Größe und Position der Öffnung 22 ist dabei so gewählt, dass die Patchkabel 18 beim Verschwenken des Rahmens 17 einer minimalen mechanischen Belastung ausgesetzt sind.

Hierzu ist die Öffnung 22 in einem Bereich der Führung 21 positioniert, der benachbart zu der bzw. in der Nähe der Schwenkachse des Rahmens 17 angeordnet ist. Insbesondere liegt die Öffnung 22 in dem Bereich der Führung 21, durch den sich die Schwenkachse des Rahmens 17 erstreckt. Mit anderen Worten ist die Öffnung 22 demnach in vorzugsweise unmittelbarer Nähe eines Drehpunkts des schwenkbaren Rahmens 17 angeordnet. Weiterhin ist die Öffnung-22 derart in der Führung 21 positioniert, dass dieselbe außerhalb des Bereichs des Sockels 19 angeordnet ist, und zwar sowohl bei einem in das Gehäuse11 hineingeschwenkten als auch bei einem aus dem Gehäuse 11 herausgeschwenkten Rahmen 17. Beim Verschwenken des Rahmens 17 werden die Patchkabel 18 demnach weder gestaucht, gedreht oder geknickt. Mechanische Belastungen auf die Patchkabel 18 und damit die von den Patchkabeln 18 geführten Lichtwellenleiter werden vermieden. Im Zusammenhang mit einer belastungsfreien Führung der Patchkabel 18 ist weiterhin von Bedeutung, dass ebenfalls in einem unteren Bereich des schwenkbaren Rahmens 17 benachbart zur Führung 21 Umlenkbleche 23 positioniert sind. Mit Hilfe der Umlenkbleche 23 sind die Patchkabel 18 unter minimaler mechanischer Beanspruchung von dem schwenkbaren Rahmen 17 in die Führung 21 umlenkbar.

Die als Kabelwanne ausgebildete Aufnahme 20 verfügt im Bereich der Holme 16 über seitliche Durchbrüche bzw. ist im Bereich der Holme 16 seitlich offen. Hierdurch können auf besonders einfache Art und Weise die Patchkabel 18 aus dem Lichtwellenleiter-Verteilerschrank 10 herausgeführt und einem zum Beispiel benachbarten, nicht-dargestellten Lichtwellenleiter-Verteilerschrank zum Aufbau einer weitergehenden Verkabelung zugeführt werden. Eine Frontwand 24 der Aufnahme 20 verfügt über eine nach oben offene Aussparung 25, um so den frontseitigen Zugriff auf die in der Kabelwanne bzw. Aufnahme 20 geführten Patchkabel 18 zu erleichtern. In Figur 3 ist aus Gründen einer verbesserten grafischen Darstellung des Sockels 19 die Frontwand 24 nicht gezeigt.

Mit der Erfindung wird demnach ein Lichtwellenleiter-Verteilerschrank bereit gestellt, der zum einfachen und schnellen Verbinden von über Patchkabeln geführten Lichtwellenleitern einen schwenkbaren Rahmen aufweist und bei welchem große Mengen von Patchkabeln auf einfache Art und Weise und mit minimaler mechanischer Beanspruchung aus dem Lichtwellenleiter-Verteilerschrank herausgeführt werden können.

Obwohl im gezeigten Ausführungsbeispiel der durch die Aufnahme 20 gebildete Raum zur Führung der Patchkabel 18 von einer Seite des Lichtwellenleiter-Verteilerschranks 10 zu einer anderen Seite desselben im Bereich der Bodenwand des Lichtwellenleiter-Verteilerschranks 10 angeordnet ist, ist auch eine Ausführung denkbar, bei der dieser Raum zwischen einem oberen Ende des Rahmens 17 und einem Dach des Gehäuses 11 bereit gestellt wird. Eine solche Ausführung ist jedoch nicht Teil der beanspruchten Erfindung. Die Anordnung im Bereich des Bodens ist jedoch aus Gründen einer vereinfachten Zugänglichkeit der Patchkabel und der Montagefreundlichkeit bevorzugt. Außer die horizontal verlaufenden Holme 14, 15 an der Vorderseite des Lichtwellenleiter-Verteilerschranks 10 stören keinerlei Hindernisse bei der schnellen Verlegung der Patchkabel 18.

### Bezugszeichenliste

- 10: Lichtwellenleiter-Verteilerschrank
- 11: Gehäuse
- 12: Holm
- 13: Holm
- 14: Holm
- 15: Holm
- 16: Holm
- 17: Rahmen
- 18: Patchkabel
- 19: Sockel
- 20: Aufnahme
- 21: Führung
- 22: Öffnung
- 23: Umlenkblech
- 24: Frontwand
- 25: Aussparung

## Patentansprüche

1. Lichtwellenleiter-Verteilerschrank, mit einem Gehäuse (11) und einem in dem Gehäuse (11) schwenkbar gelagerten Rahmen (17), wobei am Rahmen (17) Baugruppen zum Verbinden von mittels Patchkabeln (18) geführten Lichtwellenleitern befestigt sind, wobei der Rahmen (17) gegenüber dem Gehäuse (11) verkürzt ausgebildet ist, derart, dass zwischen einem unteren Ende des Gehäuses (11) und einem benachbarten, unteren Ende des Rahmens (17) eine Aufnahme (20) für die Patchkabel (18) angeordnet ist, wobei die Aufnahme (20) fest im Gehäuse (11) montiert ist, und wobei der Rahmen (17) gegenüber der Aufnahme (20) verschwenkbar ist, **dadurch gekennzeichnet, dass** am unteren Ende des Rahmens (17) eine Führung (21) für die Patchkabel (18) am Rahmen (17) fest montiert ist, wobei die Führung (21) zusammen mit dem Rahmen (17) gegenüber dem Gehäuse (11) und der Aufnahme (20) verschwenkbar ist, und dass die Führung (21) eine Öffnung (22) aufweist, wobei die Patchkabel (18) durch die Öffnung (22) von der Führung (21) in die unterhalb der Führung (21) angeordnete Aufnahme (20) leitbar sind, und wobei die Öffnung (22) in einem Bereich der Führung (21) positioniert ist, der benachbart zu der bzw. in der Nähe der Schwenkachse des Rahmens (17) angeordnet ist.

2. Lichtwellenleiter-Verteilerschrank nach Anspruch 1, **dadurch gekennzeichnet, dass** die Öffnung (22) in einem Bereich der Führung (21) positioniert ist, durch den sich die Schwenkachse des Rahmens (17) erstreckt.

3. Lichtwellenleiter-Verteilerschrank nach Anspruch 1 oder 2, **dadurch gekennzeichnet, dass** die Aufnahme (20) seitliche Durchbrüche aufweist, derart, dass die Patchkabel (18) aus dem Lichtwellenleiter-Verteilerschrank herausführbar sind.

4. Lichtwellenleiter-Verteilerschrank nach einem oder mehreren der Ansprüche 1 bis 3, **dadurch gekennzeichnet, dass** an seitlichen Elementen des Rahmens (17) in einem Bereich oberhalb der Führung (21) Umlenkbleche (23) angeordnet sind.

5. Lichtwellenleiter-Verteilerschrank nach einem oder mehreren der Ansprüche 1 bis 4, **dadurch gekennzeichnet, dass** eine Frontwand (24) der Aufnahme (20) eine nach oben offene Aussparung (25) aufweist.

6. Lichtwellenleiter-Verteilerschrank nach einem oder mehreren der Ansprüche 1 bis 5, **dadurch gekennzeichnet, dass** der Rahmen (17) auf einem in der Aufnahme (20) angeordneten und mit der Aufnahme (20) verbundenem Sockel (19) gelagert ist.

7. Lichtwellenleiter-Verteilerschrank nach Anspruch 6, **dadurch gekennzeichnet, dass** der Sockel (19) in der Aufnahme (20) in etwa mittig positioniert ist und über eine gegenüber der Aufnahme (20) verkürzte Breite sowie Tiefe verfügt.

8. Lichtwellenleiter-Verteilerschrank nach Anspruch 6 oder 7, **dadurch gekennzeichnet, dass** die Öffnung (22) in einem Bereich der Führung (21) angeordnet ist, der außerhalb des Bereichs des Sockels (19) liegt.

## Claims

1. Optical waveguide distribution cabinet, having a housing (11) and a frame (17) which is mounted in the housing (11) such that it can pivot, with assemblies for connection of optical waveguides that are carried by means of patch cables (18) being attached to the frame (17), with the frame (17) being designed to be shorter than the housing (11) such that a holder (20) for the patch cables (18) is arranged between a lower end of the housing (11) and an adjacent, lower end of the frame (17), with the holder (20) being firmly mounted in the housing (11), and with the frame (17) being able to pivot with respect to the holder (20), **characterized in that** a guide (21) for the patch cables (18) is firmly mounted on the frame (17) at the lower end of the frame (17), with the guide (21) being able to pivot together with the frame (17) with respect to the housing (11) and the holder (20), **in that** the guide (21) has an opening (22), with the patch cables (18) being able to be arranged beneath the guide (21) passed through the opening (22) from the guide (21) into the holder (20), and with the opening (22) being positioned in an area of the guide (21) which is arranged adjacent to or in the vicinity of the pivoting axis of the frame (17).

2. Optical waveguide distribution cabinet according to Claim 1, **characterized in that** the opening (22) is positioned in an area of the guide (21) through which the pivoting axis of the frame (17) extends.

3. Optical waveguide distribution cabinet according to Claim 1 or 2, **characterized in that** the holder (20) has side apertures such that the patch cables (18) can be passed out of the optical waveguide distribution cabinet.

4. Optical waveguide distribution cabinet according to one or more of Claims 1 to 3, **characterized in that** deflection plates (23) are arranged on side elements of the frame (17) in an area above the guide (21).

5. Optical waveguide distribution cabinet according to one or more of Claims 1 to 4, **characterized in that** a front wall (24) of the holder (20) has a cutout (25) which is open at the top.

6. Optical waveguide distribution cabinet according to one or more of Claims 1 to 5, **characterized in that** the frame (17) is mounted on a base (19), which is arranged in the holder (20) and is connected to the holder (20) .

7. Optical waveguide distribution cabinet according to Claim 6, **characterized in that** the base (19) is positioned approximately centrally in the holder (20) and has a width and a depth which are shorter than the holder (20).

8. Optical waveguide distribution cabinet according to Claims 6 or 7, **characterized in that** the opening (22) is arranged in an area of the guide (21) which is outside the area of the base (19).

## Revendications

1. Armoire de distribution de fibres optiques comprenant un boîtier (11) et un cadre (17) logé dans le boîtier (11) de manière à pouvoir pivoter, des sous-ensembles destinés à relier des câbles à fibres optiques acheminés au moyen de câbles de jonction (18) étant fixés sur le cadre (17), le cadre (17) étant raccourci par rapport au boîtier (11) de telle sorte qu'un logement (20) pour les câbles de jonction (18) est disposé entre une extrémité inférieure du boîtier (11) et une extrémité inférieure voisine du cadre (17), le logement (20) étant monté à demeure dans le boîtier (11) et le cadre (17) pouvant pivoter par rapport au logement (20), **caractérisée en ce qu'**un guide (21) pour les câbles de jonction (18) est fixé à demeure au cadre (17) à l'extrémité inférieure du cadre (17), le guide (21) pouvant pivoter conjointement avec le cadre (17) par rapport au boîtier (11) et au logement (20), et que le guide (21) présente une ouverture (22), les câbles de jonction (18) pouvant être acheminés à travers l'ouverture (22) par le guide (21) dans le logement (20) qui est disposé au-dessous du guide (21), et l'ouverture (22) étant placée dans une zone du guide (21) qui est disposée à côté ou à proximité de l'axe de pivotement du cadre (17).

2. Armoire de distribution de fibres optiques selon la revendication 1, **caractérisée en ce que** l'ouverture (22) est placée dans une zone du guide (21) à travers laquelle s'étend l'axe de pivotement du cadre (17).

3. Armoire de distribution de fibres optiques selon la revendication 1 ou 2, **caractérisée en ce que** le logement (20) présente des traversées latérales de sorte que les câbles de jonction (18) puissent être sortis de l'armoire de distribution de fibres optiques.

4. Armoire de distribution de fibres optiques selon une ou plusieurs des revendications 1 à 3, **caractérisée en ce que** des tôles de déviation (23) sont disposées sur les éléments latéraux du cadre (17), dans une zone au-dessus du guide (21).

5. Armoire de distribution de fibres optiques selon une ou plusieurs des revendications 1 à 4, **caractérisée en ce qu'**une paroi avant (24) du logement (20) présente un évidement (25) ouvert vers le haut.

6. Armoire de distribution de fibres optiques selon une ou plusieurs des revendications 1 à 5, **caractérisée en ce que** le cadre (17) est monté sur un socle (19) disposé dans le logement (20) et relié avec le logement (20).

7. Armoire de distribution de fibres optiques selon la revendication 6, **caractérisée en ce que** le socle (19) est positionné approximativement au centre dans le logement (20) et présente une largeur et une profondeur inférieures à celle du logement (20).

8. Armoire de distribution de fibres optiques selon la revendication 6 ou 7, **caractérisée en ce que** l'ouverture (22) est disposée dans une zone du guide (21) qui se trouve à l'extérieur de la zone du socle (19).
